# EUROPÄISCHE PATENTSCHRIFT

(11) **EP 2 962 484 B1**
(45) Veröffentlichungstag und Bekanntmachung des Hinweises auf die Patenterteilung: **16.01.2019**
(21) Anmeldenummer: 14707942.0
(22) Anmeldetag: 25.02.2014
(51) Int. Cl.: H04W 12/12, G06F 21/55, H04W 12/06, H04W 88/02, G06F 21/31

(54) **VERFAHREN UND ENDGERÄT ZUR SICHEREN ZUGANGSCODE-EINGABE**
METHOD AND TERMINAL DEVICE FOR SECURE ACCESS CODE ENTRY
PROCÉDÉ ET TERMINAL DE SAISIE SÉCURISÉE DE CODES D'ACCÈS

(30) Priorität: 26.02.2013 DE 102013003205
(43) Veröffentlichungstag der Anmeldung: 06.01.2016
(73) Patentinhaber: Giesecke+Devrient Mobile Security GmbH, 81677 München (DE)
(72) Erfinder: MARTINI, Ullrich, 81669 München (DE)
(86) Internationale Anmeldenummer: PCT/EP2014/000494
(87) Internationale Veröffentlichungsnummer: WO 2014/131511

(56) Entgegenhaltungen:
- EP-A1- 2 629 221
- WO-A1-2013/063268
- EMMANUEL OWUSE ET AL: "ACCessory: Password Inference using Accelerometers on Smartphones", PROCEEDINGS OF THE TWELFTH WORKSHOP ON MOBILE COMPUTING SYSTEMS AND APPLICATIONS, 29. Februar 2012 (2012-02-29), XP055028670, New York, NY, USA DOI: 10.1145/2162081.2162095 ISBN: 978-1-45-031207-3
- LIANG CAI ET AL: "TouchLogger: Inferring Keystrokes On Touch Screen From Smartphone Motion", PROCEEDINGS OF THE 6TH USENIX CONFERENCE ON HOT TOPICS IN SECURITY: SERIES HOTSEC '11, 9. August 2011 (2011-08-09), XP055028349, San Francisco, CA
- LIANG CAI ET AL: "Defending against sensor-sniffing attacks on mobile phones", PROCEEDINGS OF THE 1ST ACM WORKSHOP ON NETWORKING, SYSTEMS, AND APPLICATIONS FOR MOBILE HANDHELDS, MOBIHELD '09, 1. Januar 2009 (2009-01-01), Seiten 31-36, XP055028339, New York, New York, USA DOI: 10.1145/1592606.1592614 ISBN: 978-1-60-558444-7

## Beschreibung

Die Erfindung betrifft ein Verfahren zur sicheren Eingabe eines Zugangscodes in eine Eingabeschnittstelle eines mobilen Endgeräts.

Die meisten mobilen Endgeräte wie Mobiltelefone, Smartphones und dergleichen sind durch einen individuellen Zugangscode, die PIN (personal identification number), zugriffsgesichert. Erst nach richtiger Eingabe des Zugangscodes an einer Eingabeschnittstelle des Endgeräts wird das Endgerät benutzbar. Als Eingabeschnittstelle ist z.B. eine in Hardware implementierte Tastatur (Keypad) vorgesehen, alternativ ein berührungsempfindliches Display (Touch Screen) des Endgeräts, insbesondere eine auf dem Display des Endgeräts anzeigbare Tastatur (Touch Pad).

Gerade Smartphones haben eine Reihe von diversen Sensoren, mit denen unter Ausnutzung physikalischer Effekte Daten aufgenommen werden können und im Smartphone lauffähige Applikationen gespeist werden können. Beispielsweise haben die meisten Smartphones Bewegungssensoren, durch die Bewegungen des Smartphones im Raum erfasst werden können. Die erfassten Bewegungen können beispielsweise einem Computerspiel als Eingabe dienen, z.B. in Form von Lenkbewegungen eines Kraftfahrzeugs oder von Bewegungen eines imaginären Sportlers in einer Sportart. Bei manchen Endgeräten lassen sich durch Schütteln des Endgeräts bestimmte Aktionen in der Dateiverwaltung auslösen, z.B. Laden einer anderen Datei oder dergleichen. Die meisten Endgeräte haben als weiteren Sensor eine Digitalkamera, mit der sich statische Bilder und Filme aufnehmen lassen.

In EP 2 136 536 A1 wird vorgeschlagen, einen Beschleunigungssensor eines mobilen Endgeräts zu nutzen, um das mobile Endgerät in einen zu Bewegungen des Nutzers passenden Betriebszustand zu versetzen.

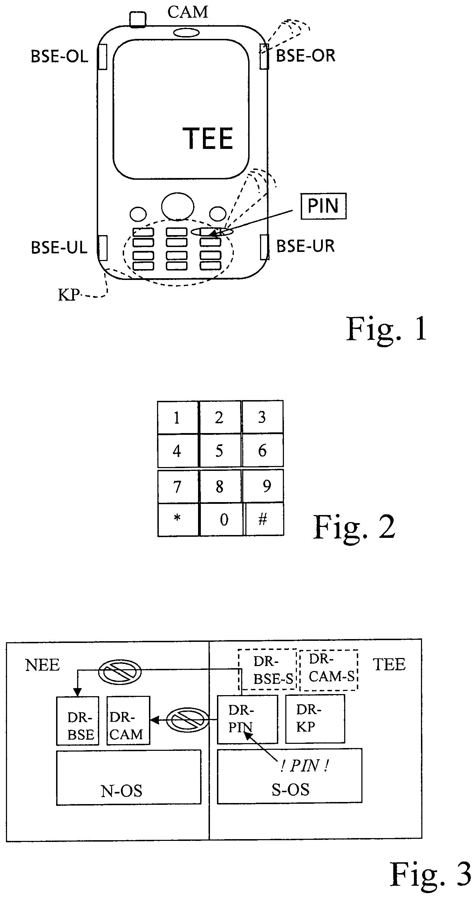

Bei der Eingabe des Zugangscodes führt der Nutzer eines Endgeräts Bewegungen seiner Hände und insbesondere Finger durch, die den Zugriff auf die Tasten der Tastatur widerspiegeln, die den einzelnen Stellen des Zugangscodes entsprechen. Fig. 2 zeigt ein Beispiel für einen üblichen Ziffernblock einer Tastatur, wie sie an einem mobilen Endgerät vorgesehen sein kann. Die Ziffer drei ("3") ist in der rechten oberen Ecke angeordnet. Betätigt der Nutzer die Taste drei, drückt er relativ zum Betätigen anderer Tasten rechts oben auf das Telefon. Ein Endgerät wie das in Fig. 1 gezeigte, könnte vier Bewegungssensoren haben, nämlich je einen rechts oben, links oben, rechts unten, links unten. Wird bei der PIN-Eingabe die rechts oben angeordnete Taste drei betätigt, könnte der rechts oben angeordnete Bewegungssensor im Vergleich zur Betätigung anderer Tasten die stärkste Reaktion zeigen, da die Taste drei am nächsten am Beschleunigungssensor rechts oben liegt. Eine Kamera des Endgeräts könnte bei Betätigung der Taste drei den Finger oder die Augen des Nutzers in einer Position rechts oben erkennen, oder in einer Bewegung zur Taste drei. Auch ein Mikrophon könnte abhängig von der betätigten Taste auf der Tastatur unterschiedlich ansprechen, ebenso unbeteiligte Kontaktlosschnittstellen wie NFC oder Bluetooth, oder ein GPS-System. Sensoren bilden somit potentielle Seitenkanäle, über die ein Zugangscode wie z.B. eine PIN ausgespäht werden könnte.

Prinzipiell arbeiten Sensoren, wie z.B. Beschleunigungssensoren, in Endgeräten derart, dass eine Sensorgröße, z.B. die Beschleunigung des Endgeräts gegenüber dem Bezugssystem (d.h. gegenüber der Außenwelt) sensorisch erfasst wird und die erfasste Beschleunigung an einen Mikroprozessor des Endgeräts weitergeleitet wird. Der Mikroprozessor verarbeitet die erfassten Sensordaten und kann sie einer Software des Endgeräts zuführen, z.B. einem Computerspiel oder einer Dateiverwaltung, einer Applikation auf Applikationsebene, oder einem Treiber auf Hardware-Ebene, der z.B. das Endgerät in den Stand-By-Modus schalten könnte.

DE 102 31 870 B4 beschreibt ein Verfahren zur gesicherten PIN-Eingabe in ein mobiles Endgerät, bei dem, während ein Nutzer eine PIN-Eingabe durchführt, Sensorgrößen von Sensoren des mobilen Endgeräts erfasst werden, die erfassten Sensorgrößen mit vorabgespeicherten nutzerspezifischen Referenz-Sensorgrößen verglichen werden und die PIN höchstens bei Übereinstimmung von erfassten und Referenz-Sensorgrößen akzeptiert wird.

Prinzipiell sind gesicherte Laufzeitarchitekturen bekannt, insbesondere zweigeteilte Laufzeitarchitekturen wie z.B. die der Firma ARM (Trustzone-Architektur), mit einer normalen Laufzeitumgebung und einer gesicherten Laufzeitumgebung. In der gesicherten Laufzeitumgebung sind Sicherheitsapplikationen und Sicherheitstreiber (z.B. für Peripheriegeräte wie z.B. eine Tastatur) unter Verwaltung eines Sicherheitsbetriebssystems implementiert.

Der Fachartikel EMMANUEL OWUSE ET AL: "ACCessory: Password Inference isung Accelerometers on Smartphones", proceedings of the twelfth workshop on mobile computing systems and applications, 29. Februar 2012 (2012-02-29), XP055028670, New York, NY, USA*,* offenbart Angriffe auf ein Smartphone, wobei während Tastatureingaben auf der Touch-Screen-Tastatur des Smartphones eine vom Beschleunigungssensor des Smartphones erfasste Sensorgröße ausgelesen wird und dadurch Rückschlüsse auf die Tastatureingaben gezogen werden. In Abschnitt 5 des Fachartikels, im Unterabschnitt "Mitigation Strategies", werden Maßnahmen zur Verhinderung des Angriffs angegeben. Eine Maßnahme ist, manche Applikationen daran zu hindern, hochauflösende Messgrößen des Beschleunigungssensors zu bekommen, indem z.B. die Abfragerate der Applikation in Bezug auf die Sensorgröße verringert wird. Eine weitere Maßnahme ist, das Layout der Tastatur des Smartphones während sensitiver Aufgaben wie z.B. Tastatureingaben abzuändern.

Der Fachartikel LIANG CAI, HAO CHEN: "TouchLogger: Inferring keystrokes on touch screen from smartphone motion", proceedings of the 6th usenix conference on hot topics in security: series hotsec '11, 9. August 2011 (2011-08-09), XP055028349, San Francisco, CA*,* beschreibt die von den Autorinnen entwickelte Android Applikation "Touch Logger", die dazu eingerichtet ist, Angriffe auf ein Smartphone während Tastatureingaben am Touch Screen des Smartphones. Die Applikation wertet Vibrationen und Bewegungen aus, die durch die Tastatureingabe entstehen und zieht dadurch Rückschlüsse auf die Tastatureingaben. Über 70 % der Tastatureingaben wurden durch die Applikation korrekt ermittelt.

Das Dokument EP 2 629 221 A1, Stand der Technik gemäß Art. 54 (3) EPÜ, offenbart ein Verfahren zur gegen Angriffe gesicherten Eingabe eines Passworts auf einem Touch Screen eines Geräts, das neben dem Touch Screen Hardware-Sensoren hat. Der Angriff beruht, ähnlich wie in der vorliegenden Anmeldung, darauf, einen Output der Hardware-Sensoren während der Eingabe des Passworts auf dem Touch Screen auszuwerten, um zu ermitteln, welche Tasten zur Eingabe des Passworts betätigt wurden. Die Abwehrmaßnahme besteht darin, dass an Prozesse, die im Hintergrund laufen, identifiziert als Prozesse, die vom Betriebssystem nicht über Nutzereingaben informiert werden, keine Outputs von Hardware-Sensoren weitergeleitet werden.

Der Erfindung liegt die Aufgabe zu Grunde, ein Verfahren zur sicheren Eingabe eines Zugangscodes in eine Eingabeschnittstelle eines mobilen Endgeräts zu schaffen, und ein entsprechendes Endgerät.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zur sicheren Eingabe eines Zugangscodes in eine Eingabeschnittstelle eines mobilen Endgeräts vorgesehen. Das Verfahren zeichnet sich dadurch aus, dass während eines Eingabe-Zeitraums, in welchem der Vorgang der Eingabe des Zugangscodes liegt, zumindest ein oder manche an der Eingabe des Zugangscodes unbeteiligte Sensoren des Endgeräts, die jeweils zur sensorischen Erfassung einer Sensorgröße eingerichtet sind, am Erfassen oder Weitergeben der jeweiligen Sensorgröße gehindert werden, indem durch das Endgerät ein deaktivierter Sensorzustand sichergestellt wird. Je nach Art des Sensors wird das Erfassen, Weitergeben oder beides verhindert.

Genauer kann jeder Sensor, der am Erfassen gehindert werden kann, einen aktivierten Zustand einnehmen, in welchem der Sensor in der Lage ist, die Sensorgröße zu erfassen und weiterzuleiten, und einen deaktivierten Zustand einnehmen, in welchem der Sensor unfähig ist, die Sensorgröße zu erfassen, oder unfähig ist, die Sensorgröße weiterzugeben (weiterzuleiten). Im aktivierten Zustand ist der Sensor also funktionsfähig. Im deaktivierten Zustand ist der Sensor nicht voll funktionsfähig, entweder weil er die Sensorgröße nicht erfassen kann, oder weil er die Sensorgröße nicht zur Bearbeitung an den Mikroprozessor des Endgeräts weitergeben kann, oder beides. Dabei wird der Sensor dadurch am Erfassen oder Weiterleiten der Sensorgröße gehindert, dass durch das Endgerät sichergestellt wird, dass der Sensor während des Eingabe-Zeitraums den deaktivierten Zustand hat.

Wenn der Sensor bzw. die Sensoren während der Eingabe des Zugangscodes am Erfassen der jeweiligen Sensorgröße gehindert werden, können sich Eigenheiten bei der Eingabe, die vom Wert des Zugangscodes abhängen, nicht auf die Sensorgröße niederschlagen. Falls doch eine Sensorgröße erzeugt wird, z.B. weil die Messung mechanisch erfolgt und sich nicht oder nicht ohne Weiteres ausschalten lässt, wird die erfasste Sensorgröße zumindest nicht zur Auswertung weitergeleitet, z.B. an den Mikroprozessor des Endgeräts, so dass aus der Sensorgröße keine Information über den eingegebenen Zugangscode ausgespäht werden kann. Der Seitenkanal der Sensorgröße zur Ausspähung des Zugangscodes ist in beiden Fällen - Verhindern des Erfassens oder Verhindern des Weiterleitens der Sensorgröße - abgeschnitten.

Somit ist gemäß Anspruch 1 ein Verfahren zur sicheren Eingabe eines Zugangscodes in eine Eingabeschnittstelle eines mobilen Endgeräts geschaffen.

Ein Sensor kann beispielsweise durch Trennen des Sensors von der Versorgung mit Leistung oder Strom oder Spannung etc. am Erfassen oder Weiterleiten der Sensorgröße gehindert werden. Ein von der Leistungs-, Strom- bzw. Spannungsversorgung getrennter Sensor, der als Kamera gestaltet ist, kann die Sensorgröße nicht erfassen und zudem nicht weiterleiten, ist also in beiderlei Hinsicht abgeschnitten. Ein von der Leistungs-, Strom bzw. Spannungsversorgung getrennter Beschleunigungssensor, dessen Sensorgröße auf der Messung einer mechanischen Größe, z.B. Schwingung, beruht, erzeugt durch die mechanische Bewegung des Endgeräts zwar zwangsweise einen Beschleunigungswert als Sensorgröße, aber die erfasste Sensorgröße wird nicht zur Auswertung an den Mikroprozessor weitergeleitet.

Als Sensor ist wahlweise zumindest einer der folgenden vorgesehen: eine Bewegungssensor-Anordnung mit ein oder mehreren Bewegungssensoren, eine Kamera-Anordnung mit ein oder mehreren Kameras, eine Mikrophon-Anordnung mit ein oder mehreren Mikrophonen, eine Kontaktlosschnittstelle, insbesondere NFC-Schnittstelle oder Bluetooth-Schnittstelle.

Wahlweise werden alle an der Eingabe des Zugangscodes unbeteiligte Sensoren des Endgeräts am Erfassen oder Weitergeben der jeweiligen Sensorgröße gehindert. So sind z.B. Kamera, Beschleunigungssensoren, Kontaktlos (z.B. NFC)-Schnittstelle an der Eingabe eines Zugangscodes unbeteiligt und ihre Funktionsfähigkeit während der Zugangscode-Eingabe ist überflüssig. Bei einer sprachlichen Eingabe des Zugangscodes ist ein Mikrophon als Sensor beteiligt und erforderlich, bei der Eingabe über Tastatur ist ein Mikrophon unbeteiligt und überflüssig.

Wahlweise wird anlässlich einer Veranlassung einer Zugangscode-Eingabe seitens des Endgeräts, für jeden Sensor, der am Erfassen oder Weiterleiten gehindert wird, durch das Endgerät der Sensor daraufhin geprüft, ob er im aktivierten Zustand oder im deaktivierten Zustand ist. Ggf. wird der Sensor deaktiviert oder am Aktiviertwerden gehindert.

Wahlweise ist als Eingabe-Schnittstelle eine Tastatur vorgesehen, insbesondere eine Hardware-Tastatur mit körperlichen Tasten oder eine auf einem berührungsempfindlichen Display des Endgeräts anzeigbare Soft-Tastatur.

Wahlweise ist als Zugangscode eine PIN vorgesehen, insbesondere eine numerische PIN (PIN = personal identification number).

Wahlweise umfasst das Endgerät zu jedem Sensor einen Sensortreiber, wobei, um den Sensor am Erfassen oder Weitergeben zu hindern, der Sensortreiber zumindest teilweise oder ganz deaktiviert wird.

Wahlweise werden der oder die Sensoren durch eine in einer gesicherten Laufzeitumgebung des Endgeräts implementierte Sicherheitssoftware am Erfassen der jeweiligen Sensorgröße gehindert, insbesondere durch eine Sicherheitsapplikation oder einen Sicherheitstreiber. Hierdurch ist die Sensor-Hinderung (z.B. Deaktivierung) vor Missbrauch geschützt. Insbesondere wird so ein vom Nutzer unbemerktes Aushebeln der Schutzmaßnahme durch Schadsoftware wie Viren oder Trojaner verhindert.

Ein erfindungsgemäßes mobiles Endgerät umfasst eine Eingabeschnittstelle, über die ein Zugangscode eingebbar ist, mindestens einen Sensor, und zudem eine Einrichtung, um Sensoren des Endgeräts am Erfassen oder Weiterleiten ihrer Sensorgröße zu hindern, indem durch das Endgerät ein deaktivierter Sensorzustand sichergestellt wird, während an einer Eingabeschnittstelle des Endgeräts ein Zugangscode eingegeben wird.

Bei dem Endgerät ist wahlweise als Sensor zumindest einer der folgenden vorgesehen: eine Bewegungssensor-Anordnung mit ein oder mehreren Bewegungssensoren, die z.B. an unterschiedlichen Orten am Endgerät angeordnet sind, z.B. links unten, links oben, rechts unten, rechts oben, mittig rechts, mittig links, oben mittig, unten mittig, etc.; eine Kamera-Anordnung mit ein oder mehreren Kameras, eine Mikrophon-Anordnung mit ein oder mehreren Mikrophonen, eine Kontaktlosschnittstelle, insbesondere NFC-Schnittstelle oder Bluetooth-Schnittstelle.

Als Eingabe-Schnittstelle am Endgerät ist wahlweise eine Tastatur vorgesehen, insbesondere eine Hardware-Tastatur mit körperlichen Tasten oder eine auf einem berührungsempfindlichen Display des Endgeräts anzeigbare Soft-Tastatur.

Als Eingabe-Schnittstelle am Endgerät ist wahlweise eine Tastatur vorgesehen, insbesondere eine Hardware-Tastatur mit körperlichen Tasten oder eine auf einem berührungsempfindlichen Display des Endgeräts anzeigbare Soft-Tastatur.

Das Endgerät hat wahlweise eine gesicherte Laufzeitumgebung, die durch ein Sicherheitsbetriebssystem steuerbar ist, und in der eine Sicherheitssoftware implementiert ist, durch welche sich der oder die Sensoren am Erfassen oder Weitergeben der jeweiligen Sensorgröße hindern lassen. Durch die so erzielte Steuerung der Sensor-Deaktivierung aus der gesicherten Laufzeitumgebung heraus mittels der Sicherheitssoftware ist sichergestellt, dass die Sensor-Deaktivierung auch wirklich durchgeführt wird und nicht - unbemerkt vom Nutzer des Endgeräts - heimlich unterbunden wird.

Wahlweise umfasst in dem Endgerät die Sicherheitssoftware eine in der gesicherten Laufzeitumgebung implementierte PIN-Eingabe-Software, insbesondere eine PIN-Eingabe-Applikation oder einen PIN-Eingabe-Treiber. Durch die PIN-Eingabe-Software ist das Endgerät auf bevorstehende Eingabe eines Zugangscodes überwachbar. Das Endgerät hat zu jedem Sensor, der am Erfassen oder Weitergeben seiner Sensorgröße hinderbar ist, einen Sensortreiber, durch den das Erfassen und Weitergeben der Sensorgröße mit dem Sensor steuerbar ist. Im Normalbetrieb ist also der Sensor durch den Sensortreiber softwaremäßig auf Hardwareebene gesteuert. Die Sensortreiber sind gemäß der Erfindung durch die PIN-Eingabe-Software steuerbar. Die Steuerung ist insbesondere vorzugsweise derart gestaltet, dass, sobald durch die PIN-Eingabe-Software eine bevorstehende Eingabe eines Zugangscodes erkannt wird, durch die PIN-Eingabe-Software veranlasst wird, dass die Sensortreiber so gesteuert werden, dass die Sensoren am Erfassen oder Weitergeben der jeweiligen Sensorgröße gehindert werden.

Eine bevorstehende PIN-Eingabe ist für das Endgerät beispielsweise daran erkennbar, dass über eine (Nutzer-) Schnittstelle (z.B. Display) des Endgeräts an den Nutzer eine Aufforderung zur Eingabe eines Zugangscodes ausgegeben wird. Im Gesamtablauf wird also z.B. sobald durch das Endgerät über die (Nutzer-) Schnittstelle (z.B. Display) eine Aufforderung zur Zugangscode-Eingabe ausgegeben wird, die Sicherheitssoftware veranlasst, die Sensoren zu deaktivieren oder sonstwie am Erfassen oder Weiterleiten ihrer Sensorgröße zu hindern.

Die PIN-Eingabe-Software ist wahlweise als PIN-Eingabe-Treiber gestaltet, wobei die Sensortreiber auf Hardwareebene durch die PIN-Eingabe-Software steuerbar sind, insbesondere über eine Busverbindung, insbesondere I2C-Bus- oder SPI-Bus-Verbindung. Sensoren sind Hardware-Elemente, die üblicherweise auf Hardware-Ebene angesteuert werden, z.B. über eine I2C-Bus oder SPI-Bus oder eine andere geeignete Busverbindung. Hardware-Elemente werden meist durch Treiber gesteuert. Entsprechend werden die Sensoren durch Sensortreiber gesteuert. Eine Tastatur ist ebenfalls ein Hardware-Element, und wird daher vorzugsweise durch einen Treiber, nämlich den Tastaturtreiber, gesteuert, vorzugsweise auf Hardware-Ebene, z.B. über eine Busverbindung, z.B. I2C-Bus oder SPI-Bus. Bei einer Ausführungsform, bei welcher die Sicherheitssoftware als Überwachungselement einen PIN-Eingabe-Treiber hat, sind somit alle Steuersoftwares als Treiber gestaltet und auf Hardwareebene verbunden, z.B. über eine gemeinsame Busverbindung.

Eine PIN-Eingabe-Software in Form eines Treibers macht somit die Implementierung der Erfindung strukturell besonders effizient und einfach.

Wahlweise sind die Sensortreiber durch die PIN-Eingabe-Software deaktivierbar und hierdurch am Liefern von Daten hinderbar.

Ein Endgerät mit einer gesicherten Laufzeitumgebung ist wahlweise wie folgt gestaltet. Wahlweise hat der jeweilige Sensortreiber einen außerhalb der gesicherten Laufzeitumgebung implementierten unsicheren Sensortreiber und einen innerhalb der gesicherten Laufzeitumgebung implementierten gesicherten Sensortreiber. Die Sensortreiber inner- bzw. außerhalb der gesicherten Laufzeitumgebung können identischen oder unterschiedlichen Funktionsumfang haben. Wahlweise ist durch die PIN-Eingabe-Software zumindest der unsichere Sensortreiber deaktivierbar. Hierdurch wird erreicht, dass der Sensor unter Steuerung der PIN-Eingabe-Software unter die ausschließliche Steuerung durch die gesicherte Laufzeitumgebung gestellt wird. Von außerhalb der gesicherten Laufzeitumgebung ist der Sensor dagegen nicht mehr ansteuerbar. Alternativ wird der Sensor völlig deaktiviert.

Im Folgenden wird die Erfindung an Hand von Ausführungsbeispielen und unter Bezugnahme auf die Zeichnung näher erläutert, in der zeigen:
- Fig. 1: ein Endgerät gemäß einer Ausführungsform der Erfindung;
- Fig. 2: einen typischen Nummernblock einer Tastatur eines Endgeräts;
- Fig. 3: eine zweigeteilte Laufzeitarchitektur in einem Endgerät gemäß einer Ausführungsform der Erfindung.

Fig. 1 zeigt ein Endgerät gemäß einer Ausführungsform der Erfindung, z.B. ein Mobiltelefon oder Smartphone, in dem eine gesicherte Laufzeitumgebung TEE (trusted execution environment) implementiert ist. Über eine Tastatur KP (key pad) lässt sich zur Freischaltung des Endgeräts eine PIN als Zugangscode eingeben. Das Endgerät hat zudem eine Digitalkamera CAM und in der Nähe jeder der vier Ecken je einen Beschleunigungssensor BSE-OR, BSE-OL, BSE-UR, BSE-UL. Die Digitalkamera CAM und die vier Beschleunigungssensoren BSE-OR, BSE-OL, BSE-UR, BSE-UL sind an der Eingabe einer PIN in die Tastatur KP unbeteiligt, könnten aber unbeabsichtigt Rückmeldung über das Verhalten des Nutzers bei der PIN-Eingabe liefern. Folglich werden gemäß der Erfindung, wenn der Mikroprozessor des Endgeräts eine Aufforderung zur PIN-Eingabe ausgibt, automatisch die Kamera CAM und die vier Beschleunigungssensoren BSE-OR, BSE-OL, BSE-UR, BSE-UL (und ggf. weitere überflüssige Sensoren) automatisch deaktiviert oder am Aktiviertwerden gehindert, und zumindest solange im deaktivierten Zustand gehalten, bis die PIN-Eingabe abgeschlossen ist. Fig. 2 zeigt eine typische Tastatur KP für ein mobiles Endgerät wie z.B. das aus Fig. 1.

Fig. 3 zeigt eine zweigeteilte Laufzeitarchitektur in dem mobilen Endgerät aus Fig. 1, gemäß einer Ausführungsform der Erfindung. Das Endgerät umfasst eine normale, unsichere Laufzeitumgebung NEE (normal execution environment), gesteuert durch ein Normalbetriebssystem N-OS (normal operating system) und eine gesicherte Laufzeitumgebung TEE (trusted execution environment), gesteuert durch ein Sicherheitsbetriebssystem S-OS (secure operating system). In der normalen, unsicheren Laufzeitumgebung NEE, gesteuert durch ein Normalbetriebssystem N-OS sind ein Kameratreiber DR-CAM zum Steuern der Digitalkamera und ein BSE-Sensor-Treiber DR-BSE zum Steuern der Beschleunigungssensoren BSE-OR, BSE-OL, BSE-UR, BSE-UL implementiert. In der gesicherten Laufzeitumgebung TEE, unter Steuerung des Sicherheitsbetriebssystem S-OS, sind ein Tastaturtreiber DR-KP und ein PIN-Eingabe-Treiber DR-PIN implementiert. Durch den PIN-Eingabe-Treiber DR-PIN wird das Endgerät auf PIN-Eingabe überwacht. Sobald die Tastatur KP für die Eingabe einer PIN freigeschaltet wird und der Nutzer aufgefordert wird, die PIN über die Tastatur KP einzugeben, werden, noch bevor der Nutzer die Möglichkeit erhält, die PIN einzugeben, durch den PIN-Eingabe-Treiber DR-PIN der Kameratreiber DR-CAM und der BSE-Treiber DR-BSE deaktiviert, so dass die Kamera CAM und die Beschleunigungssensoren BSE-* dem Mikroprozessor keine Sensorgrößen liefern. Erst frühestens nachdem die PIN-Eingabe abgeschlossen ist, gibt der PIN-Eingabe-Treiber DR-PIN die Kamera CAM und die Beschleunigungssensoren BSE-* wieder frei.

Wie in Fig. 3 durch die gestrichelten Kästchen angedeutet ist, können die Sensortreiber optional einen normalen Sensortreiber DR-BSE bzw. DR-CAM in der normalen Laufzeitumgebung NEE und einen sicheren Sensortreiber DR-BSE-S bzw. DR-CAM-S in der sicheren Laufzeitumgebung TEE haben. Zumindest die unsicheren Sensortreiber DR-BSE, DR-CAM werden bei PIN-Eingabe deaktiviert bzw. deaktiviert gehalten. Hierdurch sind die Sensoren BSE-*, CAM aus der unsicheren Laufzeitumgebung NEE heraus nicht ansteuerbar, und nur höchstens aus der sicheren Laufzeitumgebung TEE heraus ansteuerbar.

Der PIN-Eingabe-Treiber DR-PIN aus Fig. 3 ist als Treiber auf Hardware-Ebene gestaltet und kann somit, sofern eine Schnittstelle auf Hardware-Ebene zwischen der normalen und der ungesicherten Laufzeitumgebung vorgesehen ist, direkt auf Hardware-Ebene mit den Treibern DR-CAM, DR-BSE der Sensoren kommunizieren, z.B. über den I2C-Bus. Alternativ kann die Deaktivierung bzw. Aktivierungsverhinderung der Sensoren während der PIN-Eingabe durch eine PIN-Applikation (d.h. auf Applikationsebene) unter Steuerung des Sicherheitsbetriebssystems S-OS erfolgen.

## Patentansprüche

1. Verfahren zur sicheren Eingabe eines Zugangscodes (PIN) in eine Eingabeschnittstelle (KP) eines mobilen Endgeräts,
wobei während eines Eingabe-Zeitraums, in welchem der Vorgang der Eingabe des Zugangscodes (PIN) liegt, zumindest manche an der Eingabe des Zugangscodes (PIN) unbeteiligte Sensoren (BSE-OL, BSE-OR, BSE-UL, BSE-UR, CAM) des Endgeräts, oder zumindest ein solcher Sensor, die jeweils zur sensorischen Erfassung einer Sensorgrößen eingerichtet sind, am Erfassen oder /und Weitergeben der jeweiligen Sensorgröße gehindert werden,
**dadurch gekennzeichnet, dass**
jeder Sensor (BSE-OL, BSE-OR, BSE-UL, BSE-UR, CAM), der am Erfassen oder Weitergeben gehindert werden kann, einen aktivierten Zustand einnehmen kann, in welchem der Sensor (BSE-OL, BSE-OR, BSE-UL, BSE-UR, CAM) in der Lage ist, die Sensorgröße zu erfassen und weiterzugeben, und einen deaktivierten Zustand einnehmen kann, in welchem der Sensor (BSE-OL, BSE-OR, BSE-UL, BSE-UR, CAM) unfähig ist, die Sensorgröße zu erfassen oder/und weiterzugeben, und wobei der Sensor (BSE-OL, BSE-OR, BSE-UL, BSE-UR, CAM) dadurch am Erfassen oder/und Weitergeben der Sensorgröße gehindert wird, dass durch das Endgerät sichergestellt wird, dass der Sensor (BSE-*, CAM) während des Eingabe-Zeitraums den deaktivierten Zustand hat.

2. Verfahren nach Anspruch 1, wobei alle an der Eingabe des Zugangscodes (PIN) unbeteiligte Sensoren (BSE-OL, BSE-OR, BSE-UL, BSE-UR, CAM) des Endgeräts am Erfassen oder/und Weitergeben der jeweiligen Sensorgröße gehindert werden.

3. Verfahren nach Anspruch 1 oder 2, wobei anlässlich einer Veranlassung einer Zugangscode-Eingabe seitens des Endgeräts, für jeden Sensor (BSE-OL, BSE-OR, BSE-UL, BSE-UR, CAM), der am Erfassen oder/und Weitergeben gehindert wird, durch das Endgerät der Sensor daraufhin geprüft wird, ob er im aktivierten Zustand oder im deaktivierten Zustand ist.

4. Verfahren nach einem der Ansprüche 1 bis 3, wobei als Zugangscode eine PIN vorgesehen ist, insbesondere eine numerische PIN.

5. Verfahren nach einem der Ansprüche 1 bis 4, wobei das Endgerät zu jedem Sensor (BSE-OL, BSE-OR, BSE-UL, BSE-UR, CAM) einen Sensortreiber (DR-BSE, DR-CAM) umfasst, und wobei, um den Sensor (BSE-OL, BSE-OR, BSE-UL, BSE-UR, CAM) am Erfassen oder/und Weitergeben zu hindern, der Sensortreiber (DR-BSE, DR-CAM) zumindest teilweise oder ganz deaktiviert wird.

6. Verfahren nach einem der Ansprüche 1 bis 5, wobei der oder die Sensoren (BSE-OL, BSE-OR, BSE-UL, BSE-UR, CAM) durch eine in einer gesicherten Laufzeitumgebung (TEE) des Endgeräts implementierte Sicherheitssoftware am Erfassen oder/und Weitergeben der jeweiligen Sensorgröße gehindert werden, insbesondere durch eine Sicherheitsapplikation oder einen Sicherheitstreiber (DR-PIN).

7. Mobiles Endgerät mit einer Eingabeschnittstelle (KP), über die ein Zugangscode (PIN) eingebbar ist, mit mindestens einem Sensor (BSE-OL, BSE-OR, BSE-UL, BSE-UR, CAM),
**umfassend** eine Einrichtung, durch die sich während eines Eingabe-Zeitraums, in welchem der Vorgang der Eingabe eines Zugangscodes (PIN) in eine Eingabeschnittstelle (KP) des Endgeräts liegt, zumindest ein oder manche an der Eingabe des Zugangscodes (PIN) unbeteiligte Sensoren (BSE-OL, BSE-OR, BSE-UL, BSE-UR, CAM) des Endgeräts, die jeweils zur sensorischen Erfassung einer Sensorgrößen eingerichtet sind, am Erfassen oder/ und Weitergeben der jeweiligen Sensorgröße hindern lassen,
**dadurch gekennzeichnet, dass**
jeder Sensor (BSE-OL, BSE-OR, BSE-UL, BSE-UR, CAM), der am Erfassen oder Weitergeben gehindert werden kann, einen aktivierten Zustand einnehmen kann, in welchem der Sensor (BSE-OL, BSE-OR, BSE-UL, BSE-UR, CAM) in der Lage ist, die Sensorgröße zu erfassen und weiterzugeben, und einen deaktivierten Zustand einnehmen kann, in welchem der Sensor (BSE-OL, BSE-OR, BSE-UL, BSE-UR, CAM) unfähig ist, die Sensorgröße zu erfassen oder/und weiterzugeben, und wobei die Einrichtung eingerichtet ist, den Sensor (BSE-OL, BSE-OR, BSE-UL, BSE-UR, CAM) dadurch am Erfassen oder/und Weitergeben der Sensorgröße zu hindern, dass durch das Endgerät sichergestellt wird, dass der Sensor (BSE-*, CAM) während des Eingabe-Zeitraums den deaktivierten Zustand hat.

8. Endgerät nach Anspruch 7, wobei als Sensor zumindest einer der folgenden vorgesehen ist: eine Bewegungssensor-Anordnung mit ein oder mehreren Bewegungssensoren (BSE-OL, BSE-OR, BSE-UL, BSE-UR), eine Kamera-Anordnung mit ein oder mehreren Kameras (CAM), eine Mikrophon-Anordnung mit ein oder mehreren Mikrophonen, eine Kontaktlosschnittstelle, insbesondere NFC-Schnittstelle oder Bluetooth-Schnittstelle.

9. Endgerät nach Anspruch 7 öder 8, wobei als Eingabe-Schnittstelle eine Tastatur (KP) vorgesehen ist, insbesondere eine Hardware-Tastatur mit körperlichen Tasten oder eine auf einem berührungsempfindlichen Display des Endgeräts anzeigbare Soft-Tastatur.

10. Endgerät nach einem der Ansprüche 7 bis 9, das eine gesicherte Laufzeitumgebung (TEE) aufweist, die durch ein Sicherheitsbetriebssystem (S-OS) steuerbar ist, und in der eine Sicherheitssoftware (DR-PIN) implementiert ist, durch welche sich der oder die Sensoren (BSE-OL, BSE-OR, BSE-UL, BSE-UR, CAM) am Erfassen oder/und Weitergeben der jeweiligen Sensorgröße hindern lassen.

11. Endgerät nach Anspruch 10,
- wobei die Sicherheitssoftware eine in der gesicherten Laufzeitumgebung (TEE) implementierte PIN-Eingabe-Software, insbesondere PIN-Eingabe-Applikation oder PIN-Eingabe-Treiber (DR-PIN), umfasst, durch die das Endgerät auf bevorstehende Eingabe eines Zugangscodes (PIN) überwachbar ist;
- das Endgerät zu jedem Sensor (BSE-OL, BSE-OR, BSE-UL, BSE-UR, CAM), der am Erfassen oder/und Weitergeben der jeweiligen Sensorgröße hinderbar ist, einen Sensortreiber (DR-BSE, DR-CAM) umfasst, durch den das Erfassen und Weitergeben der Sensorgröße mit dem Sensor (BSE-OL, BSE-OR, BSE-UL, BSE-UR, CAM) steuerbar ist; wobei
- die Sensortreiber (DR-BSE, DR-CAM) durch die PIN-Eingabe-Software (DR-PIN) steuerbar sind, insbesondere derart steuerbar sind, dass,
- sobald durch die PIN-Eingabe-Software (DR-PIN) eine bevorstehende Eingabe eines Zugangscodes (PIN) erkannt wird, durch die PIN-Eingabe-Software (DR-PIN) veranlasst wird, dass die Sensortreiber (DR-BSE, DR-CAM) so gesteuert werden, dass die Sensoren (BSE-OL, BSE-OR, BSE-UL, BSE-UR, CAM) am Erfassen oder/und Weitergeben der jeweiligen Sensorgröße gehindert werden.

12. Endgerät nach Anspruch 11, wobei die PIN-Eingabe-Software als PIN-Eingabe-Treiber (DR-PIN) gestaltet ist, und wobei die Sensortreiber (DR-BSE, DR-CAM) auf Hardwareebene durch die PIN-Eingabe-Software steuerbar sind, insbesondere über eine Busverbindung, insbesondere I2C-Bus- oder SPI-Bus-Verbindung.

13. Endgerät nach Anspruch 11 oder 12, wobei die Sensortreiber (DR-BSE; DR-CAM) durch die PIN-Eingabe-Software (DR-PIN) deaktivierbar sind.

14. Endgerät nach Anspruch 13, wobei der jeweilige Sensortreiber (DR-BSE, DR-CAM) einen außerhalb der gesicherten Laufzeitumgebung (TEE) implementierten unsicheren Sensortreiber und einen innerhalb der gesicherten Laufzeitumgebung (TEE) implementierten gesicherten Sensortreiber (DR-BSE-S, DR-CAM-S) umfasst, und wobei durch die PIN-Eingabe-Software (DR-PIN) zumindest der unsichere Sensortreiber deaktivierbar ist.

## Claims

1. A method for securely inputting an access code (PIN) to an input interface (KP) of a mobile terminal,
wherein, during an input time period covering the process of inputting the access code (PIN), at least some sensors (BSE-OL, BSE-OR, BSE-UL, BSE-UR, CAM) of the terminal that are uninvolved in the input of the access code (PIN), or at least one such sensor, said sensors being respectively configured to capture a sensor variable by sensor, are hindered from capturing and/or passing on the respective sensor variable,
**characterized in that**
every sensor (BSE-OL, BSE-OR, BSE-UL, BSE-UR, CAM) that can be hindered from capturing or passing on can assume an activated state in which the sensor (BSE-OL, BSE-OR, BSE-UL, BSE-UR, CAM) is able to capture and pass on the sensor variable, and can assume a deactivated state in which the sensor (BSE-OL, BSE-OR, BSE-UL, BSE-UR, CAM) is unable to capture and/or pass on the sensor variable, and wherein the sensor (BSE-OL, BSE-OR, BSE-UL, BSE-UR, CAM) is hindered from capturing and/or passing on the sensor variable by the terminal ensuring that the sensor (BSE-*, CAM) has the deactivated state during the input time period.

2. The method according to claim 1, wherein all sensors (BSE-OL, BSE-OR, BSE-UL, BSE-UR, CAM) of the terminal that are uninvolved in the input of the access code (PIN) are hindered from capturing and/or passing on the respective sensor variable.

3. The method according to claim 1 or 2, wherein upon the causing of an access code input on the part of the terminal, for every sensor (BSE-OL, BSE-OR, BSE-UL, BSE-UR, CAM) that is hindered from capturing and/or passing on, the sensor is checked by the terminal as to whether it is in the activated state or in the deactivated state.

4. The method according to any of claims 1 to 3, wherein as the access code a PIN is provided, in particular a numerical PIN.

5. The method according to any of claims 1 to 4, wherein the terminal comprises a sensor driver (DR-BSE, DR-CAM) for every sensor (BSE-OL, BSE-OR, BSE-UL, BSE-UR, CAM), and wherein the sensor driver (DR-BSE, DR-CAM) is deactivated at least partly or completely to hinder the sensor (BSE-OL, BSE-OR, BSE-UL, BSE-UR, CAM) from capturing and/or passing on.

6. The method according to any of claims 1 to 5, wherein the sensor or sensors (BSE-OL, BSE-OR, BSE-UL, BSE-UR, CAM) are hindered from capturing and/or passing on the respective sensor variable by a security software implemented in a trusted execution environment (TEE) of the terminal, in particular by a security application or a security driver (DR-PIN).

7. A mobile terminal having an input interface (KP) via which an access code (PIN) is inputtable, having at least one sensor (BSE-OL, BSE-OR, BSE-UL, BSE-UR, CAM),
comprising a device by which, during an input time period covering the process of inputting an access code (PIN) to an input interface (KP) of the terminal, at least one or some sensors (BSE-OL, BSE-OR, BSE-UL, BSE-UR, CAM) of the terminal that are uninvolved in the input of the access code (PIN), said sensors being respectively configured to capture a sensor variable by sensor, can be hindered from capturing and/or passing on the respective sensor variable, **characterized in that**
every sensor (BSE-OL, BSE-OR, BSE-UL, BSE-UR, CAM) that can be hindered from capturing or passing on can assume an activated state in which the sensor (BSE-OL, BSE-OR, BSE-UL, BSE-UR, CAM) is able to capture and pass on the sensor variable, and can assume a deactivated state in which the sensor (BSE-OL, BSE-OR, BSE-UL, BSE-UR, CAM) is unable to capture and/or pass on the sensor variable, and wherein the device is configured to hinder the sensor (BSE-OL, BSE-OR, BSE-UL, BSE-UR, CAM) from capturing and/or passing on the sensor variable by the terminal ensuring that the sensor (BSE-*, CAM) has the deactivated state during the input time period.

8. The terminal according to claim 7, wherein there is provided as a sensor at least one of the following: a motion sensor arrangement having one or more motion sensors (BSE-OL, BSE-OR, BSE-UL, BSE-UR), a camera arrangement having one or more cameras (CAM), a microphone arrangement having one or more microphones, a contactless interface, in particular an NFC interface or Bluetooth interface.

9. The terminal according to claim 7 or 8, wherein there is provided as an input interface a keyboard (KP), in particular a hardware keyboard having physical keys or a soft keyboard displayable on a touch-sensitive display of the terminal.

10. The terminal according to any of claims 7 to 9, which has a trusted execution environment (TEE) which is controllable by a secure operating system (S-OS), and in which security software (DR-PIN) is implemented by which the sensor or sensors (BSE-OL, BSE-OR, BSE-UL, BSE-UR, CAM) can be hindered from capturing and/or passing on the respective sensor variable.

11. The terminal according to claim 10,
- wherein the security software comprises PIN input software implemented in the trusted execution environment (TEE), in particular a PIN input application or PIN input driver (DR-PIN), through which the terminal can be monitored for impending input of an access code (PIN);
- the terminal comprises, for every sensor (BSE-OL, BSE-OR, BSE-UL, BSE-UR, CAM) that can be hindered from capturing and/or passing on the respective sensor variable, a sensor driver (DR-BSE, DR-CAM) through which the capturing and passing on of the sensor variable with the sensor (BSE-OL, BSE-OR, BSE-UL, BSE-UR, CAM) is controllable; wherein
- the sensor drivers (DR-BSE, DR-CAM) are controllable by the PIN input software (DR-PIN), in particular such that
as soon as an impending input of an access code (PIN) is recognized by the PIN input software (DR-PIN), the PIN input software (DR-PIN) causes the sensor drivers (DR-BSE, DR-CAM) to be so controlled that the sensors (BSE-OL, BSE-OR, BSE-UL, BSE-UR, CAM) are hindered from capturing and/or passing on the respective sensor variable.

12. The terminal according to claim 11, wherein the PIN input software is formed as a PIN input driver (DR-PIN), and wherein the sensor drivers (DR-BSE, DR-CAM) are controllable at the hardware level by the PIN input software, in particular via a bus connection, in particular an I2C bus or SPI bus connection.

13. The terminal according to claim 11 or 12, wherein the sensor drivers (DR-BSE; DR-CAM) can be deactivated by the PIN input software (DR-PIN).

14. The terminal according to claim 13, wherein the respective sensor driver (DR-BSE, DR-CAM) comprises an insecure sensor driver implemented outside the trusted execution environment (TEE), and a secure sensor driver (DR-BSE-S, DR-CAM-S) implemented within the trusted execution environment (TEE), and wherein at least the insecure sensor driver can be deactivated by the PIN input software (DR-PIN).

## Revendications

1. Procédé d'entrée sécurisée d'un code d'accès (PIN) dans une interface d'entrée (KP) d'un terminal mobile,
cependant que, pendant un laps de temps d'entrée dans lequel le processus de l'entrée du code d'accès (PIN) a lieu, au moins certains des capteurs (BSE-OL, BSE-OR, BSE-UL, BSE-UR, CAM) du terminal non impliqués dans l'entrée du code d'accès (PIN), ou du moins un tel capteur, qui sont respectivement conçus pour la saisie sensorielle d'une grandeur captée, sont empêchés de saisir et / ou de transmettre la grandeur captée respective,
**caractérisé en ce que**
chaque capteur (BSE-OL, BSE-OR, BSE-UL, BSE-UR, CAM) pouvant être empêché de saisir ou de transmettre peut adopter un état activé dans lequel le capteur (BSE-OL, BSE-OR, BSE-UL, BSE-UR, CAM) est en mesure de saisir et de transmettre la grandeur captée, et peut adopter un état désactivé dans lequel le capteur (BSE-OL, BSE-OR, BSE-UL, BSE-UR, CAM) est incapable de saisir ou / et de transmettre la grandeur captée, et cependant que le capteur (BSE-OL, BSE-OR, BSE-UL, BSE-UR, CAM) est empêché de saisir et / ou de transmettre la grandeur captée par fait que, par le terminal, il est assuré que le capteur (BSE-*, CAM) a, pendant le laps de temps d'entrée, l'état désactivé.

2. Procédé selon la revendication 1, cependant que tous les capteurs (BSE-OL, BSE-OR, BSE-UL, BSE-UR, CAM) du terminal non impliqués dans l'entrée du code d'accès (PIN) sont empêchés de saisir et / ou de transmettre la grandeur captée respective.

3. Procédé selon la revendication 1 ou 2, cependant que, à l'occasion d'un déclenchement d'une entrée de code d'accès de la part du terminal, pour chaque capteur (BSE-OL, BSE-OR, BSE-UL, BSE-UR, CAM) qui est empêché de saisir et / ou de transmettre, le capteur est alors vérifié par le terminal pour discerner s'il est dans l'état activé ou désactivé.

4. Procédé selon une des revendications de 1 à 3, cependant que, en tant que code d'accès, un PIN est prévu, en particulier un PIN numérique.

5. Procédé selon une des revendications de 1 à 4, cependant que le terminal comprend, pour chaque capteur (BSE-OL, BSE-OR, BSE-UL, BSE-UR, CAM), un pilote de capteur (DR-BSE, DR-CAM), et que, pour empêcher le capteur (BSE-OL, BSE-OR, BSE-UL, BSE-UR, CAM) de saisir et / ou de transmettre, le pilote de capteur (DR-BSE, DR-CAM) est désactivé au moins partiellement ou entièrement.

6. Procédé selon une des revendications de 1 à 5, cependant que le ou les capteurs (BSE-OL, BSE-OR, BSE-UL, BSE-UR, CAM) sont, par un logiciel de sécurité mis en oeuvre dans un environnement d'exécution (TEE) sécurisé du terminal, empêchés de saisir et / ou de transmettre la grandeur captée respective, en particulier par une application de sécurité ou par un pilote de sécurité (DR-PIN).

7. Terminal mobile ayant une interface d'entrée (KP) par l'intermédiaire de laquelle un code d'accès (PIN) peut être entré, comprenant au moins un capteur (BSE-OL, BSE-OR, BSE-UL, BSE-UR, CAM),
**comprenant** un dispositif par lequel, pendant un laps de temps d'entrée dans lequel le processus de l'entrée du code d'accès (PIN) dans une interface d'entrée (KP) du terminal a lieu, au moins un ou certains des capteurs (BSE-OL, BSE-OR, BSE-UL, BSE-UR, CAM) du terminal non impliqués dans l'entrée du code d'accès (PIN) et respectivement conçus pour la saisie sensorielle d'une grandeur captée peuvent être empêchés de saisir et / ou de transmettre la grandeur captée respective,
**caractérisé en ce que**
chaque capteur (BSE-OL, BSE-OR, BSE-UL, BSE-UR, CAM) pouvant être empêché de saisir ou de transmettre peut adopter un état activé dans lequel le capteur (BSE-OL, BSE-OR, BSE-UL, BSE-UR, CAM) est en mesure de saisir et de transmettre la grandeur captée, et peut adopter un état désactivé dans lequel le capteur (BSE-OL, BSE-OR, BSE-UL, BSE-UR, CAM) est incapable de saisir ou / et de transmettre la grandeur captée, et cependant que le dispositif est conçu pour empêcher le capteur (BSE-OL, BSE-OR, BSE-UL, BSE-UR, CAM) de saisir et / ou de transmettre la grandeur captée par fait que, par le terminal, il est assuré que le capteur (BSE-*, CAM) a, pendant le laps de temps d'entrée, l'état désactivé.

8. Terminal selon la revendication 7, cependant que, comme capteur, au moins un des suivants est prévu : un agencement de capteur de mouvement ayant un ou plusieurs capteurs de mouvement (BSE-OL, BSE-OR, BSE-UL, BSE-UR), un agencement de caméra ayant une ou plusieurs caméras (CAM), un agencement de microphone ayant un ou plusieurs microphones, une interface sans contact, en particulier une interface NFC ou une interface Bluetooth.

9. Terminal selon la revendication 7 ou 8, cependant que, comme interface d'entrée, un clavier (KP) est prévu, en particulier un clavier matériel à touches physiques, ou un clavier logiciel pouvant être affiché sur un écran tactile.

10. Terminal selon une des revendications de 7 à 9, comportant un environnement d'exécution (TEE) sécurisé qui peut être commandé par un système d'exploitation de sécurité (S-OS) et dans lequel un logiciel de sécurité (DR-PIN) est mis en oeuvre, par lequel le ou les capteurs (BSE-OL, BSE-OR, BSE-UL, BSE-UR, CAM) peuvent être empêchés de saisir et / ou de transmettre la grandeur captée respective.

11. Terminal selon la revendication 10,
- cependant que le logiciel de sécurité comprend un logiciel d'entrée de PIN mis en oeuvre dans l'environnement d'exécution (TEE) sécurisé, en particulier une application d'entrée de PIN ou un pilote d'entrée de PIN (DR-PIN), par lequel le terminal peut être surveillé quant à une entrée imminente d'un code d'accès (PIN) ;
- le terminal comprend, pour chaque capteur (BSE-OL, BSE-OR, BSE-UL, BSE-UR, CAM) pouvant être empêché de saisir et /ou de transmettre la grandeur captée respective, un pilote de capteur (DR-BSE, DR-CAM) par lequel la saisie et la transmission de la grandeur captée avec le capteur peut être commandée (BSE-OL, BSE-OR, BSE-UL, BSE-UR, CAM) ; cependant que
- les pilotes de capteurs (DR-BSE, DR-CAM) peuvent être commandés par le logiciel d'entrée de PIN (DR-PIN), peuvent en particulier être commandés de telle façon que
- dès que, par le logiciel d'entrée de PIN (DR-PIN), une entrée imminente d'un code d'accès (PIN) est reconnue, il est déclenché par le logiciel d'entrée de PIN (DR-PIN) que les pilotes de capteurs (DR-BSE, DR-CAM) sont commandés de telle manière que les capteurs (BSE-OL, BSE-OR, BSE-UL, BSE-UR, CAM) sont empêchés de saisir ou de transmettre la grandeur captée respective.

12. Terminal selon la revendication 11, cependant que le logiciel d'entrée de PIN est réalisé sous forme de pilote d'entrée de PIN (DR-PIN), et cependant que les pilotes de capteurs (DR-BSE, DR-CAM) peuvent être commandés au niveau matériel par le logiciel d'entrée de PIN, en particulier par l'intermédiaire d'une connexion BUS, en particulier d'une connexion BUS I2C ou d'une connexion BUS SPI.

13. Terminal selon la revendication 11 ou 12, cependant que les pilotes de capteurs (DR-BSE, DR-CAM) peuvent être désactivés par le logiciel d'entrée de PIN (DR-PIN).

14. Terminal selon la revendication 13, cependant que le pilote de capteur respectif (DR-BSE, DR-CAM) comprend un pilote de capteur non sécurisé mis en oeuvre à l'extérieur de l'environnement d'exécution (TEE) sécurisé, et un pilote de capteur (DR-BSE-S, DR-CAM-S) sécurisé mis en oeuvre à l'intérieur de l'environnement d'exécution (TEE) sécurisé, et cependant que, par le logiciel d'entrée de PIN (DR-PIN), au moins le pilote de capteur non sécurisé peut être désactivé.
